# EUROPÄISCHE PATENTANMELDUNG

(11) **EP 2 469 488 A1**
(43) Veröffentlichungstag der Anmeldung: **27.06.2012**
(21) Anmeldenummer: 10016064.7
(22) Anmeldetag: 23.12.2010
(51) Int. Cl.: G07F 13/02, H04W 4/08

(54) **Vorrichtung zur Abgabe von Wasser**

(71) Anmelder: Grundfos Management A/S, 8850 Bjerringbro (DK)
(72) Erfinder: Denning, Lars, 8300 Odder (DK); Ravn, Ole, 8362 Hörning (DK)
(74) Vertreter: Vollmann, Heiko

(57) **Zusammenfassung**

Die Vorrichtung (1) ist zur Steuerung der Abgabe von Wasser aus mindestens einem Wasserspeicher (8) oder einer Pumpe (14) an mindestens eine Zapfstelle (3) vorgesehen und weist Mittel zum Steuern der Wasserabgabe an die Zapfstelle (3) sowie eine Abrechnungseinheit auf, die bargeldlos mit elektronischen Speichermedien arbeitet. Die Abrechnungseinheit und die Speichermedien sind zur Übertragung von Werteinheiten von einem zum anderen Speichermedium ausgebildet.

## Beschreibung

Die Erfindung betrifft eine Vorrichtung zur Steuerung der Abgabe von Wasser mit den im Oberbegriff des Anspruchs 1 angegebenen Merkmalen.

Anlagen zur Wassergewinnung und zur dosierten Wasserabgabe zählen zum Stand der Technik und werden insbesondere in Trockengebieten der dritten Welt eingesetzt. Sie weisen regelmäßig mindestens einen Wasserspeicher auf, der typischerweise von einer in einer Brunnenbohrung angeordneten Pumpe gespeist wird. Die Energieversorgung der Anlage erfolgt über Photovoltaik oder Windenergie und ist akkugepuffert. Um einerseits die Abgabe des Wassers nach Art eines Bezahlsystems zu ermöglichen, andererseits jedoch eine Beschädigung durch Diebstahlversuche von Bargeld zu vermeiden, ist in solchen Anlagen typischerweise eine gattungsgemäße Vorrichtung vorgesehen, welche die Abgabe von Wasser an mindestens eine Zapfstelle steuert und mit einer bargeldlosen mit elektronischen Speichermedien arbeitenden Abrechnungseinheit ausgestattet ist. Als Speichermedium dienen typischerweise eine elektronische Speicherkarte, sei es eine chipbasierte oder mit Magnetstreichen ausgestattete Karte oder ein elektronisches Speichermedium in beliebiger anderer Form, beispielsweise ein in Kunststoff eingegossener Speicherchip. Ungeachtet des Speichermediums ist dieses dazu ausgebildet, in der Abrechnungseinheit einen dort auszulesenden Wert abzugeben, wobei nach der Wasserentnahme bzw. nach der Abrechnung innerhalb der Abrechnungseinheit dieser zuvor ausgelesene Wert durch einen neuen Wert ersetzt wird, d. h. dass das Medium nicht nur lesbar, sondern auch beschreibbar ist. Als Speichermedien können beispielsweise Speicherkarten mit Magnetstreichen oder chipbasierte Speicherkarten dienen. Vorteilhaft werden hier Speichermedien eingesetzt, die kontaktlos aus- und einlesbar sind. Dabei zählt es zum Stand der Technik, die Speichermedien in einer sogenannten Aufladestation gegen Zahlung von Geld oder in einem anderen Abrechungsmodus mit Werteinheiten aufzuladen, die dann in der Abrechnungseinheit abgefragt und gelöscht bzw. durch einen neuen Wert überschrieben werden.

Nachteilig bei der bekannten Vorrichtung ist es, dass dann, wenn die Werteinheiten vom Speichermedium verbraucht sind, dieses erst wieder zu einer Aufladestation gebracht werden muss, um geladen zu werden. Dies ist ungünstig, da sich der Verbraucher/Abnehmer nicht nur zur Abgabe von Wasser zur Abrechnungseinheit bzw. zur Zapfstelle begeben muss, sondern darüber hinaus zu gegebener Zeit auch noch zur Aufladestation. Dies kann insbesondere in ländlichen Regionen ungünstig sein, wo die Entfernungen groß und die Zahl der Aufladestationen gering ist.

Vor diesem Hintergrund liegt der Erfindung die Aufgabe zugrunde, eine gattungsgemäße Vorrichtung so auszubilden, dass sie flexibler nutzbar ist und insbesondere die vorgenannten Nachteile vermeidet.

Diese Aufgabe wird gemäß der Erfindung durch die im kennzeichnenden Teil des Anspruchs 1 angegebenen Merkmale gelöst. Demgemäß sind die Abrechnungseinheit und das Speichermedium zur Übertragung von Werteinheiten von einem zum anderen Speichermedium ausgebildet. Auf diese Weise ist die Möglichkeit eines auch nichtkommerziellen Zwischenhandels gegeben. Auch kann jemand, der noch eine Vielzahl von Werteinheiten auf seinem Speichermedium besitzt, einen anderen unterstützen bzw. ihm aushelfen, indem er seine Werteinheiten auf das Speichermedium des anderen ganz oder teilweise überträgt. Die erfindungsgemäße Lösung ermöglicht somit eine wesentlich flexiblere Nutzung der Vorrichtung, da es nun nicht mehr zwingend erforderlich ist, eine Aufladestelle zum Aufladen des Speichermediums aufzusuchen, sondern es vielmehr auch möglich ist, von einem anderen Speichermedium Werteinheiten zu erhalten. Dies ist insbesondere bei Vorrichtungen von Bedeutung, die zur Grundversorgung des Menschen mit Trinkwasser dienen, da hiermit bargeldlos Werteinheiten, die typischerweise einer bestimmten Zapfmenge von Wasser entsprechen, beliebig von einem auf ein anderes Speichermedium übertragen werden können. So genügt es, insbesondere in ländlichen Regionen, wenn lediglich ein Vertreter einer Gruppe von Menschen sein Speichermedium in einer Aufladestelle mit Werteinheiten auflädt. Er kann dann später die anderen Menschen in seiner Gruppe mit Werteinheiten versorgen, indem diese von seinem elektronischen Speichermedium nacheinander jeweils auf ein Speichermedium einer Person der Gruppe übertragen wird.

Als elektronisches Speichermedium kann grundsätzlich jedes geeignete Medium, beispielsweise eine Speicherkarte mit Magnetstreifen oder mit Chip verwendet werden. Besonders vorteilhaft wird jedoch ein Speichermedium verwendet, das mit einem RFID(Radio Frequency Identification)-Transponder arbeitet, wobei die Abrechnungseinheit ein RFID-Schreib- und Lesegerät aufweist, über die der Speicherinhalt abfragbar und änderbar ist.

Das Speichermedium in einem RFID-Transponder zu integrieren ist besonders vorteilhaft, da damit eine kontaktlose Datenübertragung möglich ist, insbesondere eine kontaktlose Abfrage des Inhalts des Speichermediums des RFID-Transponders durch die Abrechnungseinheit und im weiteren ein Überschreiben des Speicherinhalts des RFID-Transponders mittels des RFID-Schreib- und Lesegerätes, das Teil der Abrechungseinheit bildet. Derartige RFID-Transponder zählen zum Stand der Technik, sie können beispielsweise induktiv oder elektromagnetisch kuppelbar sein. Es handelt sich hierbei um ausgereifte und allgemein bekannte Systeme. Die Transponder sind dabei typischerweise vollständig in Kunststoff eingebettet, sodass sie unempfindlich gegen Verschmutzungen und zumindest kurzfristig auch gegen Nässe sind.

Vorteilhaft weist die Vorrichtung unterschiedliche Arten von Speichermedien auf, die jeweils für bestimmte Anwendungszwecke oder Personengruppen vorgesehen sind. So ist gemäß der Erfindung eine erste Art von Speichermedien vorgesehen, die nur zur Abgabe von Werteinheiten an ein anderes Speichermedium in der Abrechnungseinheit vorgesehen ist. Zweckmäßigerweise werden hierzu in der Abrechnungseinheit entsprechende Speichermedienaufnahmen vorgesehen, sei es, dass zwei Speichermedien nacheinander in einer Aufnahme platziert werden oder dass zwei gesonderte Aufnahmen für jedes Medium vorhanden sind.

Gemäß einer vorteilhaften Weiterbildung der Erfindung ist eine zweite Art von Speichermedien vorgesehen, die zur Aufnahme von Werteinheiten von der ersten Art von Speichermedien und/oder von der zweiten Art von Speichermedien in der Abrechnungseinheit vorgesehen ist. Diese zweite Art von Speichermedien stellt also typischerweise ein Entnahmespeichermedium dar, wobei als zusätzliche Funktion statt oder neben der Wasserentnahme auch eine Übertragung von Werteinheiten auf ein anderes Speichermedium, typischerweise der zweiten Art von Speichermedien möglich ist. Diese zweite Art von Speichermedien ist also für Verbraucher vorgesehen, wohingegen die erste Art der Speichermedien eher für Verwalter, Verteiler oder Verkäufer vorgesehen ist.

Gemäß einer Weiterbildung der Erfindung ist eine dritte Art von Speichermedien vorgesehen, welche für eine vorbestimmte zeit- und/oder mengengesteuerte Abgabe von Wasser vorgesehen ist. Diese Art von Speichermedien ist typischerweise für Endverbraucher vorgesehen und dient dazu, dass ein Endverbraucher beispielsweise täglich eine vorbestimmte Menge von Wasser an der Vorrichtung zapfen kann. Diese dritte Art von Speichermedien kann gegebenenfalls mit weiteren Merkmalen/Eigenschaften von Speichermedien kombiniert werden, beispielsweise mit denen der zweiten Art von Speichermedien, allerdings typischerweise mit der Beschränkung, dass die vorbestimmte zeit- und/oder mengengesteuerte Abgabe von Wasser davon nicht tangiert ist.

Schließlich kann gemäß der Erfindung eine weitere, nämlich eine vierte Art von Speichermedien vorgesehen sein, welche zur Auswahl der Zapfstelle dient. Dann weist die Vorrichtung mehrere Zapfstellen auf, wobei die durch die vierte Art von Speichermedien auszuwählende Zapfstelle typischerweise eine festverrohrte Zapfstelle ist, beispielsweise für die Wasserversorgung einer Schule, eines Hauses oder eines Bauernhofs. Diese vierte Art von Speichermedien arbeitet mit einer weiteren Art von Speichermedien zusammen, über welche die Zapfmenge bestimmt wird. Dies kann entweder eine der zweiten Art von Speichermedien oder eine der dritten Art von Speichermedien sein.

Um zwei Speichermedien unterschiedlicher Art, insbesondere zwei RFID-Transponder verarbeiten zu können, ist die Abrechnungseinheit so ausgebildet, dass sie gleichzeitig zwei Speichermedien aufnehmen und verarbeiten kann. So können entweder zwei Aufnahmen für RFID-Transponder oder eine Aufnahme zur gemeinsamen Aufnahme von zwei RFID-Transpondern vorgesehen sein.

Gemäß einer Weiterbildung der Erfindung sind anlagenseitig oder vorrichtungsseitig Mittel zur Wasseraufbereitung vorgesehen, sodass wahlweise Wasser unterschiedlicher Qualität ausgegeben werden kann. So können die vorgenannten Arten von Speichermedien jeweils für eine oder mehrere unterschiedliche Wasserqualitäten vorbestimmt sein. Letzteres wird gemäß der Erfindung vorteilhaft durch eine Weiterbildung der vierten Art von Speichermedien bestimmt, quasi als besondere Zapfstelle. So kann die Vorrichtung zum wahlweisen Ausgeben von Trinkwasser, Wasser zur Versorgung von Vieh oder Wasser zum Bewässern von Pflanzen oder als Kühlmittel vorgesehen sein.

Dabei kann gemäß der Erfindung vorgesehen sein, dass ein oder mehrere solcher Vorrichtungen mit denselben Arten von Speichermedien oder gegebenenfalls anders kodierten arbeiten, sodass beispielsweise mit der ersten Art von Speichermedien, Werteinheiten an andere Speichermedien unterschiedlicher Vorrichtungen abgegeben werden können, die dann jeweils nur in ihren eigenen Vorrichtungen nutzbar sind.

Unabhängig davon ist gemäß einer Weiterbildung der Vorrichtung vorgesehen, dass die Abrechnungseinheit so ausgebildet ist, dass sie auf einem Speichermedium der ersten Art jede Transaktion von Werteinheiten dieses Mediums unter Angabe der beteiligten Abrechnungseinheit und des Speichermediums speichert, sodass allein anhand dieses Speichermediums jederzeit nachvollziehbar ist, welche Werteinheiten wann und wo an welches Speichermedium abgegeben worden sind.

Typischerweise ist die erfindungsgemäße Vorrichtung vorteilhaft so ausgebildet, dass die Abrechnungseinheit über eine Datenverbindung mit einem externen Datenserver verbindbar ist, sodass bei Aufnahme eines Speichermediums in die Abrechnungseinheit ein Datenabgleich mit dem externen Datenserver erfolgen kann. Ein solcher Datenserver kann vorteilhaft über eine lnternetverbindung angebunden sein. Es versteht sich, dass die Vorrichtung so ausgebildet ist, dass sie ihre Funktion auch im Falle einer Störung der Internetverbindung zuverlässig erfüllt. Hiezu sind gegebenenfalls in der Abrechnungseinheit der Vorrichtung entsprechende Pufferspeicher vorgesehen, die Daten von zwischenzeitlich verwendeten Speichermedien zwischenspeichern und dann beim späteren Wiederherstellen der Datenverbindung zum externen Datenserver mit diesem austauschen.

Gemäß einer vorteilhaften Weiterbildung der Erfindung ist es möglich, mittels des externen Datenservers ein in der Abrechnungseinheit befindliches Speichermedium für den weiteren Gebrauch im System zu sperren, wenn sich beispielsweise herausstellt, dass dieses Speichermedium gestohlen worden ist oder missbräuchlich verwendet wird. Weiterhin kann mittels des externen Datenservers ein in der Abrechnungseinheit befindliches Speichermedium mit Werteinheiten aufgeladen werden, insbesondere zum Aufladen von Speichermedien der ersten Art, aber gegebenenfalls auch zur Aufladung von Speichermedien der zweiten Art. Diese Auflade- bzw. Sperrvorgänge sind vom Anwender nicht manipulierbar, sondern laufen ab, sobald das jeweilige Speichermedium in der Abrechnungseinheit befindlich ist. Es versteht sich, dass die Speichermedien hierzu individualisiert sind, d.h. mit einem eindeutigen Code versehen sind, der beim Einlegen des Speichermediums in die Abrechnungseinheit an dem externen Datenserver übermittelt wird.

Die erfindungsgemäße Vorrichtung ist insbesondere für Wasserversorgungsanlagen zur autarken Wasserversorgung in ländlichen Gebieten vorgesehen, wo insbesondere Trinkwasser Mangelware ist. Typischerweise weist die Anlage neben einem Wasserspeicher eine Energieversorgungseinrichtung, z. B. eine Photovoltaik- oder Windkraftanlage, mittels der Strom erzeugt und die Anlage bzw. die Vorrichtung energieversorgt wird. Weiterhin weist die Anlage typischerweise eine Bohrlochpumpe auf, über die Grundwasser aus dem Boden in den einen Vorratsbehälter gepumpt wird. Die Anlagensteuerung erfolgt zumindest teilweise durch die erfindungsgemäße Vorrichtung

Die Erfindung ist nachfolgend anhand eines in der Zeichnung dargestellten Ausführungsbeispiels näher erläutert. Es zeigen:
- Fig. 1: in stark vereinfachter schematischer Darstellung eine Wasserversorgungsanlage mit einer Vorrichtung gemäß der Erfindung und
- Fig. 2: das Bedien- und Aufnahmepanel der Abrechnungseinheit der Vorrichtung.

Die anhand der Figuren dargestellte Wasserversorgungsanlage weist eine Vorrichtung 1 zur Steuerung der Abgabe von Wasser mit einer zentralen Abrechnungseinheit auf, die in einem geschlossenen Gehäuse angeordnet ist, an der Vorderseite ein Bedienpanel 2 sowie eine Zapfstelle 3, einen Leitungseingang 4 sowie in dieser Ausführungsform einen weiteren Leitungseingang 7 sowie zwei Leitungsausgänge 5 und 6 aufweist, die innerhalb der Abrechnungseinheit verschaltet sind. Über die Eingangsleitung 4 erhält die Einheit Wasser aus einem ersten Speicher 8, der über den Leitungsausgang 5 auffüllbar ist. Weiterhin ist ein zweiter Wasserspeicher 9 vorgesehen, welcher der Vorrichtung 1 nachgeschaltet ist und von dieser über die Ausgangsleitung 6 befüllt wird. Dieser Wasserspeicher 9 ist über eine Leitung 10 mit einer Zapfstelle 11 verbunden, die beispielsweise in einem Haus oder an anderer geeigneter Stelle entfernt von der Vorrichtung 1 mit der Abrechnungseinheit angeordnet sein kann. Schließlich weist die Einheit 1 eine weitere Eingangsleitung 7 auf, über die eine Bohrlochpumpe 14 angeschlossen ist, welche Grundwasser fördert, das je nach Schaltstellung des Ventils innerhalb der Vorrichtung 1 in den ersten Speicher 8 oder direkt zu einem der Verbraucher 3 bzw. 9 gefördert wird.

Energieversorgt ist die Einheit 1 über Solarzellen 12. Solarzellen 12 versorgen auch über einen Wechselrichter 13 eine Bohrlochpumpe 14 mit Strom.

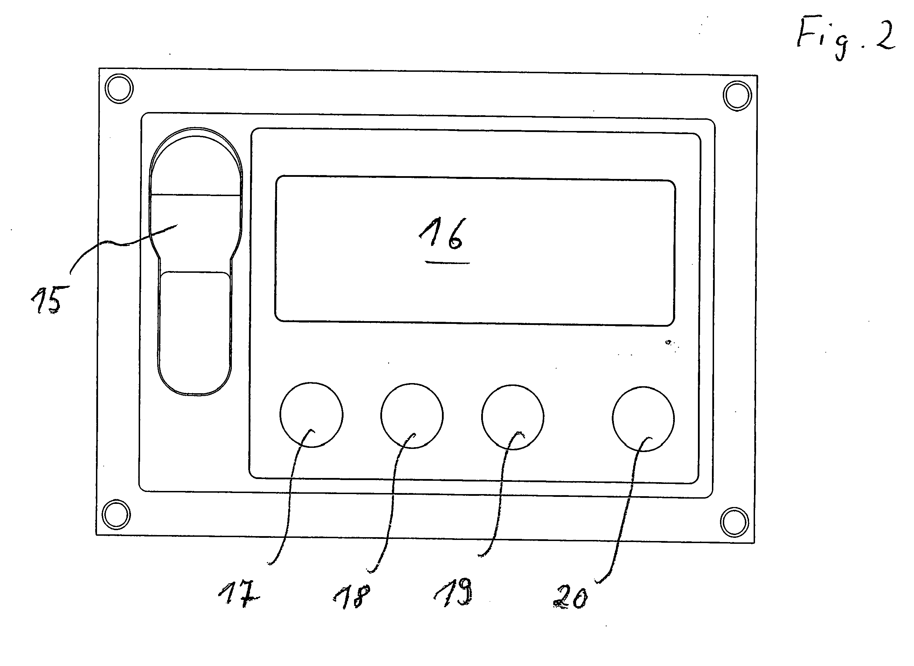

Das Bedienpanel 2 ist in Fig. 2 im Einzelnen dargestellt. Es weist eine Aufnahme 15 auf, in welche wahlweise ein oder zwei RFID-Transponder als Speichermedien einlegbar sind, die innerhalb der Aufnahme 15 in an sich bekannter Weise drahtlos energieversorgt und mit der Abrechnungseinheit datenverbunden sind. Die Abrechnungseinheit kann in der Aufnahme 15 die RFID-Transponder elektrisch versorgen und dabei die in deren elektronischen Speicher abgelegten Daten auslesen und gegebenenfalls durch andere ersetzten. Für die vorbeschriebene Vorrichtung sind insgesamt vier Arten von RFID-Transpondern unterschiedlicher Funktion bestimmt. Die unterschiedlichen Arten können farblich oder in anderer Weise graphisch oder auch hinsichtlich ihrer Geometrie gekennzeichnet sein, sodass für Bediener der Vorrichtung deren Funktion leicht erkennbar ist.

Hierbei ist eine erste Art von RFID-Transpondern vorgesehen, die so ausgelegt sind, dass sie nicht zur unmittelbaren Wasserentnahme, sondern ausschließlich zur Übertragung von Werteinheiten innerhalb der Abrechnungseinheit vorgesehen sind. Jede Werteinheit berechtigt zur Entnahme einer bestimmten Wassermenge oder zur Entnahme für eine bestimmte Zeit. Diese erste Art von RFID-Transpondern wird an gesonderten, hier nicht beschriebenen, Aufladestationen aufgeladen und dient ausschließlich zur Verteilung der Werteinheiten auf RFID-Transpondern einer zweiten Art, die in erster Linie zur werteinheitenabhängigen Wasserentnahme innerhalb der Vorrichtung 1 vorgesehen ist. Diese zweite Art von RFID-Transpondern ist jedoch so ausgebildet, dass die darauf gespeicherten Werteinheiten (Anzahl der Werteinheiten) auf einen anderen RFID-Transponder der zweiten Art übertragen werden können, wenn beide Transponder in die Aufnahme 15 eingelegt und dies über das Bedienpanel entsprechend eingeleitet wird.

Darüber hinaus ist die zweite Art von Transpondern nicht nur dazu geeignet, Werteinheiten von der ersten Art von Transpondern in der Aufnahme 15 in der Abrechnungseinheit zu erhalten und Wasser werteinheitenabhängig zu entnehmen, sondern darüber hinaus auch Werteinheiten an einen anderen Transponder der zweiten Art zu übertragen, sodass Nutzer, die mit einem Transponder der zweiten Art ausgestattet sind, auch Werteinheiten auf einen anderen Nutzer mittels der Abrechnungseinheit übertragen können.

Darüber hinaus gibt es eine dritte Art von RFID-Transpondern, welche eine zeit- und/oder mengengesteuerte Abgabe von Wasser bewirken, wenn diese in die Aufnahme 15 eingelegt werden. Diese Transponder sind insbesondere dazu bestimmt, täglich eine bestimmte Wassermenge abzugeben, wie dies beispielsweise zur Notversorgung von Menschen in Trockengebieten geboten ist. Diese RFID-Transponder der dritten Art arbeiten grundsätzlich werteinheitenfrei. Es ist jedoch denkbar, Transponder der zweiten und der dritten Art hinsichtlich ihrer Eigenschaften zu kombinieren.

Schließlich ist eine vierte Art von RFID-Transpondern vorgesehen, welche ausschließlich zur Auswahl der Zapfstelle dient. Ein solcher RFID-Transponder ist stets mit einem weiteren RFID-Transponder in die Aufnahme 15 einzugliedern, sei es mit einem der zweiten Art (typischerweise) oder gegebenenfalls auch der dritten Art, wenn die Vorrichtung hierfür ausgelegt wurde. Es sind also neben den für die Wasserentnahme erforderlichen RFID-Transpondern der zweiten und der dritten Art hier zusätzlich RFID-Transponder der vierten Art zur Auswahl der Zapfstelle sowie RFID-Transponder der ersten Art zur Übertragung von Werteinheiten vorgesehen.

Das Bedienpanel 2 weist neben der Aufnahme 15 ein Display 16 auf, welches die erforderlichen Hinweise und Angaben anzeigt, die zur Bedienung erforderlich und nur zweckmäßig sind. Weiterhin weist das Bedienpanel in dieser Ausführungsform (Fig. 2) insgesamt 4 Bedientaster 17, 18, 19 und 20 auf. Der auf dem Panel 2 links angeordnete Taster 17 steuert die Wertangabe, sei es bei der Entnahme die Anzahl von Werteinheiten, bzw. die Menge von Wasser, die entnommen werden soll oder bei der Übertragung die Anzahl der Werteinheiten, die übertragen werden soll. Parallel dazu werden im Display 16 die auf dem jeweiligen Transponder befindlichen Werteinheiten angezeigt. Schließlich ist über eine Eingabetaste 19 eine Aufladung von Werteinheiten auf die Transponder mittels eines Handys, das eine eindeutige Benutzerzuordnung erlaubt, vorgesehen. Die eigentliche Wasserentnahme wird durch die Taste 20 gesteuert, welche die Freigabe an der jeweiligen Zapfstelle bewirkt.

Wenn beispielsweise Werteinheiten von einem Transponder der ersten Art auf einen Transponder der zweiten Art übertragen werden sollen, werden beide Transponder übereinander in die Aufnahme 15 gelegt, wonach die Transponder stromversorgt sind und selbsttätig ein Auslesen der Daten erfolgt. Es kann dann durch entsprechende Betätigung der Taste 17 die Anzahl von Werteinheiten gewählt werden, die vom Transponder der ersten Art auf den der zweiten Art übertragen werden sollen. Diese werden im Display angezeigt. Sobald die Taste 18 betätigt wird, erfolgt eine Übertragung, gleichzeitig werden die Speicher in den Transpondern neu beschrieben, wobei in dem Speicher des Transponders der ersten Art auch noch die Kennung des Transponders der zweiten Art, die Uhrzeit sowie die Kennung der übertragenden Vorrichtung 1 gespeichert werden.

Wird hingegen nur ein Transponder der zweiten Art in die Aufnahme 15 eingelegt, so wird dies geräteseitig erkannt, die im Speicher des Transponders abgelegten Werteinheiten werden auf dem Display 16 angezeigt. Durch Betätigen der Taste 17 kann nun die Anzahl der Werteinheiten bzw. die Wassermenge gewählt werden, die an der Zapfstelle ausgegeben werden soll. Nachdem dies erfolgt ist, wird die Taste 20 gedrückt, die sodann eine Freigabe des Wassers an der Zapfstelle bewirkt, typischerweise an der Zapfstelle 3.

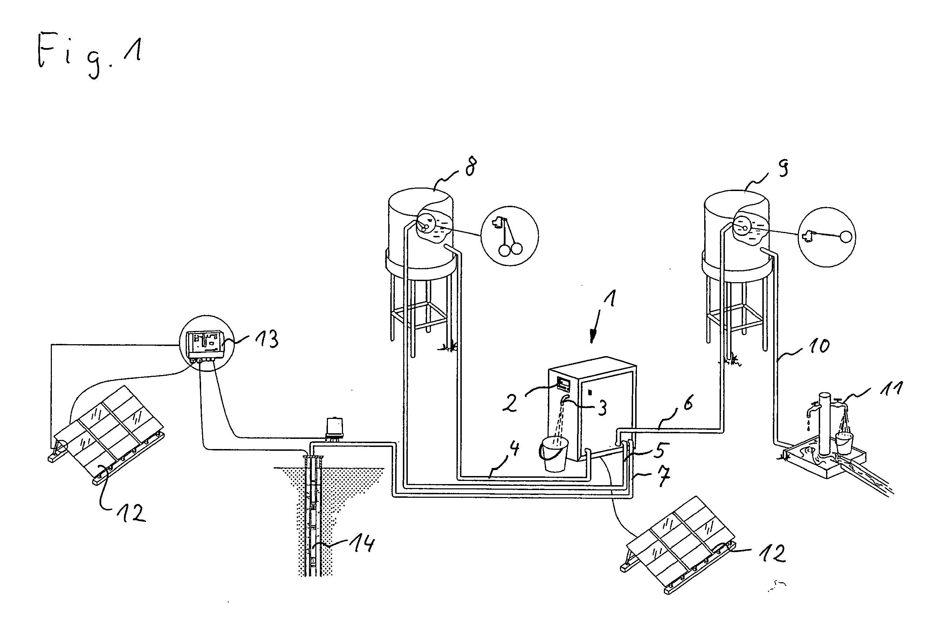

Wenn ein Transponder der zweiten Art zusammen mit einem Transponder der vierten Art in die Aufnahme eingelegt wird, so wird dies in der Abrechnungseinheit erkannt. Dabei bestimmt der Transponder der vierten Art die Zapfstelle. Diese liegt nicht notwendigerweise innerhalb der Abrechnungseinheit, sondern kann, wie anhand von Fig. 1 beispielhaft dargestellt ist, z. B. durch die Ausgangsleitung 6 gebildet sein, die zunächst zu dem Wasserspeicher 9 und über die Leitung 10 zur Zapfstelle 11 führt. In gleicher Weise können beliebige weitere Ausgangsleitungen vorgesehen sein, die unter Zwischenschaltung eines Speichers oder auch ohne Zwischenspeicher direkt an eine Zapfstelle, z. B. in einer Schule oder einem Haus enden. Sobald der Transponder der vierten Art in der Aufnahme 15 eingelegt ist, wird dies innerhalb der Einheit erkannt und die zugehörige verbrauchsseitige Leitung angesteuert. Die mengenmäßige Abgabe erfolgt dann nach Wahl am Taster 17 entsprechend den abgegebenen Werteinheiten und durch abschließende Betätigung des Tasters 20, wonach die entsprechende Wassermenge freigegeben und der Speicher des Transponders mit der verbleibenden Restmenge an Werteinheiten beschrieben wird.

Die eingangs beschriebene dritte Art von Transpondern ist typischerweise zur Freigabe einer vorbestimmten Menge pro Tag vorgesehen, diese Menge kann nach Einlegen des Transponders in die Aufnahme 15 durch Betätigen der Taste 20 an der Zapfstelle 3 entnommen werden, wonach der Transponder in der Aufnahme 15 speicherseitig zurückgesetzt wird, sodass dann beispielsweise erst am nächsten Tag eine Zapfmenge wieder entnehmbar ist.

Die vorbeschrieben Vorrichtung 1 mit Abrechnungseinheit, die in einem geschlossenen Gehäuse untergebracht ist und die alle wesentlichen für den Betrieb der Einzelkomponenten der Anlage wesentlichen elektrischen und hydraulischen Steuerungen umfasst, ist darüber hinaus entweder über eine Leitungsverbindung oder drahtlos mit einem externen Server datenverbunden, sodass sämtliche Eingaben und Entnahmen nicht nur aufgezeichnet sind, sondern an den externen Server übermittelt werden. Insbesondere werden an den externen Server übermittelt, welche Werteinheiten von einem Transponder zum anderen übertragen werden und welche Werteinheiten durch Wasserverbrauch auf welchem Transponder verbraucht werden. Damit kann zentral der Gesamtwasserverbrauch der Vorrichtung sowie Anzahl und Verteilung der Werteinheiten auf den Transpondern ermittelt werden. Auch kann über den externen Datenserver ein in der Aufnahme 15 befindlicher Transponder zu weiteren Verwendung im System gesperrt werden. Es ist auch möglich, über den Datenserver einen in der Aufnahme 15 befindlichen Transponder mit Werteinheiten aufzuladen.

### Bezugszeichenliste

- 1 -: Vorrichtung
- 2 -: Bedienpanel
- 3 -: Zapfstelle
- 4 -: Eingangsleitung vom ersten Speicher 8
- 5 -: Ausgangsleitung zum ersten Speicher 8
- 6 -: Ausgangsleitung zum zweiten Speicher 9
- 7 -: Eingangsleitung von der Pumpe
- 8 -: Erster Speicher
- 9 -: Zweiter Speicher
- 10 -: Leitung vom zweiten Speicher zur weiteren Zapfstelle 11
- 11 -: weiter Zapfstelle
- 12 -: Solarzellen
- 13 -: Wechselrichter
- 14 -: Pumpe
- 15 -: Aufnahme
- 16 -: Display
- 17 -: Taster
- 18 -: Taster
- 19 -: Taster
- 20 -: Taster

## Patentansprüche

1. Vorrichtung zur Steuerung der Abgabe von Wasser aus mindestens einem Wasserspeicher (8) und/oder einer Pumpe (14) an mindestens einer Zapfstelle (3), mit Mitteln zum Steuern der Wasserabgabe an die Zapfstelle und mit einer bargeldlosen mit elektronischen Speichermedien arbeitenden Abrechnungseinheit, **dadurch gekennzeichnet, dass** die Abrechnungseinheit und Speichermedien zur Übertragung von Werteinheiten von einem zu einem anderen Speichermedium ausgebildet sind.

2. Vorrichtung nach Anspruch 1, **dadurch gekennzeichnet, dass** jedes Speichermedium einen RFID-Transponder und die Abrechnungseinheit ein RFID-Schreib- und Lesegerät aufweisen, über die der Speicherinhalt eines Speichermediums abfragbar und änderbar ist.

3. Vorrichtung nach Anspruch 1 oder 2, **dadurch gekennzeichnet, dass** eine erste Art von Speichermedien vorgesehen ist, die nur zur Abgabe von Werteinheiten an ein anderes Speichermedium in der Abrechnungseinheit vorgesehen ist.

4. Vorrichtung nach einem der vorhergehenden Ansprüche, **dadurch gekennzeichnet, dass** eine zweite Art von Speichermedien vorgesehen ist, die zur Aufnahme von Werteinheiten von einem Speichermedium der ersten Art und/oder einem Speichermedium der zweiten Art in der Abrechnungseinheit vorgesehen ist.

5. Vorrichtung nach einem der vorhergehenden Ansprüche, **dadurch gekennzeichnet, dass** eine dritte Art von Speichermedien für eine vorbestimmte zeit- und/oder mengengesteuerte Abgabe von Wasser vorgesehen ist.

6. Vorrichtung nach einem der vorhergehenden Ansprüche, **dadurch gekennzeichnet, dass** mehrere Zapfstellen (3, 11) vorgesehen sind und dass eine vierte Art von Speichermedien vorgesehen ist, welche zur Auswahl der Zapfstelle dient.

7. Vorrichtung nach einem der vorhergehenden Ansprüche, **dadurch gekennzeichnet, dass** die Abrechnungseinheit zur gleichzeitigen Aufnahme und Signalverarbeitung von zwei Speichermedien vorgesehen ist.

8. Vorrichtung nach einem der vorhergehenden Ansprüche, **dadurch gekennzeichnet, dass** die Abrechnungseinheit zur gleichzeitigen Aufnahme eines Speichermediums der vierten Art von Speichermedien sowie einem weiteren Speichermedium anderer Art vorgesehen ist, wobei durch das eine Speichermedium der vierten Art die Zapfstelle und durch das weitere Speichermedium die Zapfmenge bestimmt ist.

9. Vorrichtung nach einem der vorhergehenden Ansprüche, **dadurch gekennzeichnet, dass** die Abrechnungseinheit auf einem Speichermedium der ersten Art jede Transaktion von Werteinheiten dieses Mediums unter Angabe der beteiligten Abrechnungseinheit und des beteiligten Speichermediums speichert.

10. Vorrichtung nach einer der vorhergehenden Ansprüche, **dadurch gekennzeichnet, dass** eine Zapfstelle durch eine Leitungsverbindung zu einem entfernten Verbraucher gebildet ist.

11. Vorrichtung nach einer der vorhergehenden Ansprüche, **dadurch gekennzeichnet, dass** Mittel zur Wasseraufbereitung vorgesehen sind und dass wahlweise Wasser unterschiedlicher Qualität ausgebbar ist.

12. Vorrichtung nach einer der vorhergehenden Ansprüche, **dadurch gekennzeichnet, dass** die Abrechnungseinheit über eine Datenverbindung mit einem externen Datenserver verbindbar ist und dass bei Aufnahme eines Speichermediums in der Abrechnungseinheit ein Datenabgleich mit dem externen Datenserver erfolgt.

13. Vorrichtung nach einem der vorhergehenden Ansprüche, **dadurch gekennzeichnet, dass** mittels des externen Datenservers ein in der Abrechnungseinheit befindliches Speichermedium für den weiteren Gebrauch sperrbar ist.

14. Vorrichtung nach einem der vorhergehenden Ansprüche, **dadurch gekennzeichnet, dass** mittels des externen Datenservers ein in der Abrechnungseinheit befindliches Speichermedium mit Werteinheiten aufladbar ist.
